# EUROPEAN PATENT APPLICATION

(11) **EP 2 741 432 A1**
(43) Date of publication of application: **11.06.2014**
(21) Application number: 11864610.8
(22) Date of filing: 31.12.2011
(51) Int. Cl.: H04B 10/07

(54) **OPTICAL TIME-DOMAIN REFLECTOMETER AND METHOD FOR OBTAINING MEASURING SIGNALS THEREOF**

(71) Applicant: Huawei Technologies Co., Ltd, Shenzhen, Guangdong 518129 (CN)
(72) Inventor: TIAN, Yuzhou, Shenzhen Guangdong 518129 (CN); YANG, Zhongwen, Shenzhen Guangdong 518129 (CN)
(74) Representative: Isarpatent
(86) International application number: PCT/CN2011/085214
(87) International publication number: WO 2013/097256

(57) **Abstract**

The present invention relates to an optical time-domain reflectometer and a method for the optical time-domain reflectometer to obtain a test signal. By enabling a semiconductor optical amplifier (SOA) to be in a switching state, when a test signal returned from a passive optical network under test is a large signal, the SOA can be turned off so that the signal is not received by an APD, so as to basically eliminate the large signal's interference in and shielding against a successive small signal, then by turning on the SOA, a small signal subsequent to the large signal is received, so as to basically eliminate a dead zone of the test signal; and by turning on the SOA in different positions of a dense reflection area, test signals is received, so as to implement distinguishing all reflected signals of the area.

## Description

### FIELD OF THE INVENTION

The present invention relates to the optical network test technologies, and in particular, to an optical time-domain reflectometer and a method for the optical time-domain reflectometer to obtain a test signal.

### BACKGROUND OF THE INVENTION

An optical time-domain reflectometer (Optical Time-Domain Reflectometer, OTDR) is a photoelectric integrated instrument made by using backscatter generated by Rayleigh scattering of a light in an optical fiber, and Fresnel reflection generated by a discontinuity point of the light in the optical fiber.

Along with massive application of a PON (Passive Optical Network, passive optical network), the OTDR is increasingly applied in laying, accepting and later monitoring of the PON.

The OTDR is placed in a central office (Central Office, CO) equipment room, and accesses an optical network through a WDM (Wavelength Division Multiplexing, wavelength division multiplexing) which additionally installed at an optical fiber output end of anOLT (Optical Line Terminal, optical line terminal), so as to implement uploading and downloading of an optical signal of a monitored band. Implementation of the uploading and downloading of the optical signal of the monitored band means that a test light signal sent by the OTDR enters the optical signal through the WDM (that is, uploading), then a backscattered optical signal and a Fresnel reflected optical signal which are generated from the test optical signal in the optical fiber return to the OTDR through the WDM (that is, downloading). The wavelength of the test light signal differs from the wavelength of a service optical signal in an ODN (Optical Distribution Network, optical distribution network), and generally is 1650 nm, therefore, monitored of the OTDR does not influence normal operation of the optical network.

Usually, the OTDR includes a digital signal processor (Digital Signal processor, DSP), a pulse generator (pulse), a laser driver (driver), a laser (Laser), a circulator (circulator), a photodetector (APD), a trans-impedance amplifier (TIA), an amplifier (Amplifier) and an analog to digital converter (ADC).

During operation, the digital signal processor generates a periodically triggered pulse, which is adjusted to a signal with a fixed pulse width and a fixed duty ratio after passing through the pulse generator, and then the laser driver completes high-power driving. The laser generates a pulse laser of the monitored band.

The laser sends a repeated high-power optical pulse, and the repeated high-power optical pulse enters, through the circulator, a backbone of an optical fiber under test, an optical splitter, and each branch subsequent to the optical splitter.

A Rayleigh backscattered optical signal and Fresnel reflected optical signal of each branch return through the backbone of the optical fiber and enter the APD through the optical circulator. The strength of the Rayleigh backscattered optical signal and Fresnel reflected optical signal is related to the pulse width and light intensity of the test light signal sent by the OTDR. Generally, the greater light power is, the larger a returned optical signal is.

The APD converts a received optical signal to a current signal which is proportional to the light intensity of the optical signal, and the current signal turns into a voltage signal through the TIA, enters the ADC after being amplified by the amplifier, is converted to a digital signal, and then is sent to the digital signal processor, so to obtain a test curve. A signal obtained by completing each repeated pulse test inside the digital signal processor is accumulated, so as to increase a signal to noise ratio, and obtain a clearer reflected signal in the test curve.

Because a discontinuity point exist in a connection between the backbone of the optical fiber and the optical splitter, after arrival, the test light signal generates a large reflected signal, and a scattered signal generated after test light signal passing through the optical splitter is very weak, causing dramatic changes of the amplitude of the scattered signal and the reflected signal which are generated from the test light signal. However, response bandwidths of the APD and a circuit in the OTDR are narrow, so that the reflected optical signal at the optical splitter in the test curve obtained by the OTDR generates a very long streaking, covering optical signals such as an attenuated signal and a reflected signal which are generated behind but not far away from the optical splitter, that is, covering events such as a joint and discontinuity point. When the length of the optical fiber subsequent to the optical splitter is very short, the OTDR basically cannot detect an event of the branch, for example, an optical fiber bend or a splicing joint or a PC (Physical Contact, an end face is a spherical surface) connector and an APC (Angled Physical Contact, an end face is an inclined spherical surface) connector, causing a large test dead zone. In addition, bilateral attenuation of a signal exists at the optical splitter, which further increases the length of the dead zone. Moreover, when the length of an optical fiber of each branch subsequent to the optical splitter is very close to one another, and the distance between reflected signals is short, dense reflected signals are generated, but the response bandwidths of the APD and the circuit in the OTDR is narrow, so that it is hard to distinguish these reflections in the test curve obtained by the OTDR, and especially, adjacent reflected signals having amplitudes greatly different from each other can hardly be distinguished through the test curve.

### SUMMARY OF THE INVENTION

Embodiments of the present invention provide an optical time-domain reflectometer and a method for the optical time-domain reflectometer to obtain a test signal, so as to eliminate a dead zone of an OTDR test signal as much as possible, so that reflected signals in the test signal are easily distinguished.

An embodiment of the present invention provides an optical time-domain reflectometer, which includes:
a laser, configured to transmit a test light to an optical network under test;
a driver, connected to a pulse generator, and configured to convert a pulse signal, generated by the pulse generator, to a control signal used to drive a semiconductor optical amplifier;
the semiconductor optical amplifier, connected to the driver, and configured to selectively absorb or amplify, under control of the control signal of the driver, a test signal from the optical network under test, wherein the test signal is a reflected signal formed through reflection of the test light in the optical network under test; and
a photodetector, connected to the semiconductor optical amplifier, and configured to convert the test signal into a current signal, where the test signal is amplified by the semiconductor optical amplifier.

An embodiment of the present invention further provides a method for the foregoing optical time-domain reflectometer to obtain a test signal, which includes:
controlling, by a digital signal processor, a pulse generator to generate a pulse signal to enable a semiconductor optical amplifier to work in a switching state;
working, by the semiconductor optical amplifier, in the switching state under control of the pulse signal; and
receiving, by a photodetector, a test signal from a passive optical network under test, when the semiconductor optical amplifier is in an open state.

In the optical time-domain reflectometer and the method for the optical time-domain reflectometer to obtain the test signal which are provided by the embodiments of the present invention, by enabling a semiconductor optical amplifier (SOA) to be in a switching state, when a test signal returned from a passive optical network under test is a large signal, the SOA can be turned off so that the signal is not received by an APD, so as to basically eliminate the large signal's interference in and shielding against a successive small signal, then by turning on the SOA, the small signal subsequent to the large signal is received, so as to basically eliminate a dead zone of the test signal; and by turning on the SOA in different positions of a dense reflection area, test signals are received, so as to implement distinguishing all reflected signals of the area.

### BRIEF DESCRIPTION OF THE DRAWINGS

To illustrate technical solutions in embodiments of the present invention more clearly, accompanying drawings required for describing the embodiments of the present invention are briefly introduced in the following. Apparently, the accompanying drawings in the following description merely show some embodiments of the present invention, and persons of ordinary skill in the art can derive other drawings from these accompanying drawings without creative efforts.
FIG. 1 is a flow chart of a method for an optical time-domain reflectometer to obtain a test signal according to an embodiment of the present invention;
FIG. 2A is a flow chart of another method for an optical time-domain reflectometer to obtain a test signal according to an embodiment of the present invention;
FIG. 2B is a schematic diagram of connection between an OTDR and a passive optical network under test according to an embodiment of the present invention;
FIG. 3 is a flow chart of another method for an optical time-domain reflectometer to obtain a test signal according to an embodiment of the present invention;
FIG. 4 is a flow chart of still another method for an optical time-domain reflectometer to obtain a test signal according to an embodiment of the present invention;
FIG. 5 is a schematic structural diagram of an OTDR according to an embodiment of the present invention;
FIG. 6 is a control timing sequence diagram of an SOA in an OTDR according to an embodiment of the present invention;
FIG. 7 is an experiment emulation graph of an embodiment of the present invention;
FIG. 8 is a test curve graph obtained in a conventional manner; and
FIG. 9 is an inner timing sequence relationship diagram during operation of an OTDR according to an embodiment of the present invention.

### DETAILED DESCRIPTION OF THE EMBODIMENTS

Technical solutions in embodiments of the present invention are described clearly and completely with reference to accompanying drawings in the embodiments of the present invention. Apparently, the described embodiments are merely part rather than all of the embodiments of the present invention. All other embodiments obtained by persons of ordinary skill in the art based on the embodiments of the present invention without creative efforts shall fall within the protection scope of the present invention.

An OTDR provided by an embodiment of the present invention includes: a laser, a pulse generator, a driver, a semiconductor optical amplifier (SOA), and a photodetector (APD). Persons skilled in the art may understand that in addition to these, the OTDR further includes basic functional devices, such as a digital signal processor (DSP), an optical circulator, a driver of the laser, a pulse generator of the laser, an amplifier and an analog to digital converter (ADC), which are not described in detail herein because they are not the emphasis of the present invention.

The laser is configured to transmit a test light to an optical network under test, and may be a laser in a conventional OTDR. The DSP triggers the pulse generator of the laser to generate a pulse signal, and the driver of the laser converts the pulse signal to a control signal of the laser, so that the laser emits a light, that is, generates a test light entering a passive optical network under test, to recognize events, such as an optical splitter and a connection point, through a scattered signal and a reflected signal which are generated from the test light in the passive optical network under test.

The digital signal processor is configured to generate an instruction enabling the pulse generator to generate the pulse signal, and the instruction may include information such as a pulse width and a period. Persons skilled in the art shall understand that the digital signal processor may further generate an instruction enabling the pulse generator of the laser and a pulse generator of the SOA to generate repeated pulse signals, so as to obtain an overall graph of the passive optical network. The overall graph is a complete test signal of the passive optical network.

The optical circulator is configured to receive a test signal from the passive optical network under test; and persons skilled in the art shall understand that the optical circulator may further send an optical signal, generated by the laser, into the passive optical network under test.

The pulse generator is connected to the DSP, and is configured to generate a corresponding pulse signal when receiving the instruction of the DSP, for example, to generate a pulse signal in a test period, or for example, to generate, in a test period, a plurality of repeated pulse signals with a fixed pulse width and a fixed duty ratio.

The driver is connected to the pulse generator, and is configured to convert the foregoing pulse signal, generated by the pulse generator, to a current signal, and perform power amplification to obtain a control signal of the SOA.

A driving end of the SOA is connected to the driver, and an input end is connected to the foregoing optical circulator, and the SOA is configured to, under control of the foregoing control signal of the driver, selectively absorb or amplify the test signal received by the optical circulator, where the test signal is the optical signal formed through reflection or scattering of the test light in the optical network under test.

The APD is connected to an output end of the foregoing SOA, and is configured to convert the foregoing test signal, amplified by the SOA, to a current signal.

In this embodiment, on the basis of a conventional OTDR, the OTDR has one optical apparatus SOA added, so that not only a gain with a high signal to noise ratio of the optical signal passing through its inner part is generated, but also a problem of a dead zone caused by the received large signal, and a problem of difficulty in distinguishing dense reflections are solved by controlling switch of the SOA because the SOA may reach a nanosecond driving speed, and a relatively high event resolution is obtained.

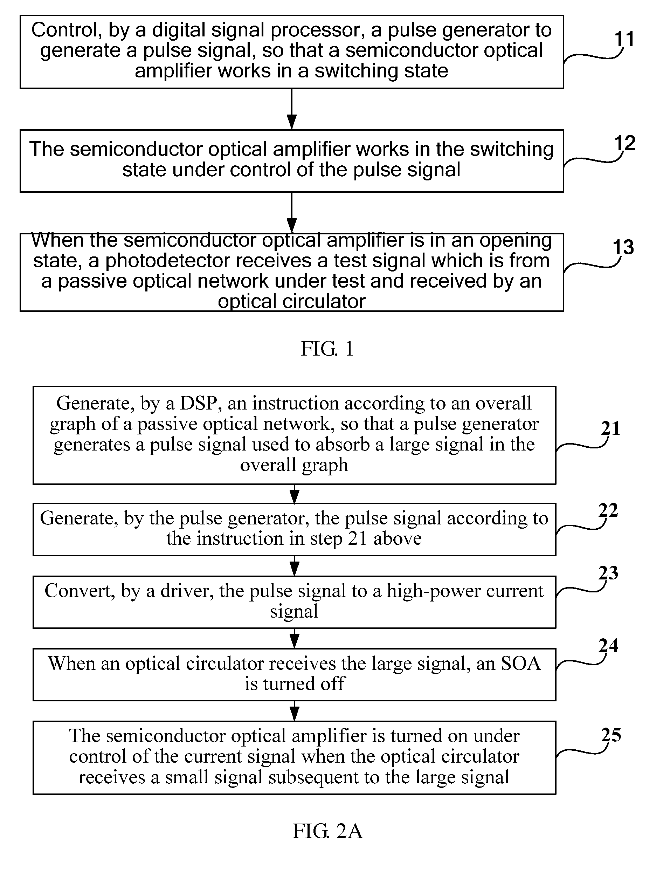

FIG. 1 is a flow chart of a method for an optical time-domain reflectometer to obtain a test signal according to an embodiment of the present invention, which includes:
Step 11: Control, by a digital signal processor, a pulse generator to generate a pulse signal, so that a semiconductor optical amplifier works in a switching state.
Step 12: The semiconductor optical amplifier works in the switching state under control of the pulse signal.
Step 13: When the semiconductor optical amplifier is in an open state, a photodetector receives a test signal which is from a passive optical network under test and received by an optical circulator.

In this embodiment, the OTDR enables the semiconductor optical amplifier (SOA) to be in the switching state, so that when the test signal returned from the passive optical network under test is a large signal, the SOA can be turned off so that the signal is not received by an APD, so as to basically eliminate the large signal's interference in and shielding against a successive small signal, then by turning on the SOA, the small signal subsequent to the large signal is received, so as to basically eliminate a dead zone of the test signal; and by turning on the SOA in different positions of a dense reflection area, test signals are received, so as to implement distinguishing all reflected signals of the area.

Specifically, FIG. 2A is a flow chart of a method for an optical time-domain reflectometer to obtaining a test signal according to an embodiment of the present invention. In this embodiment, an SOA works in a switching state, and the method for the OTDR to obtain the test signal includes:
Step 21: Generate, by a DSP, an instruction according to an overall graph of a passive optical network, so that a pulse generator generates a pulse signal used to absorb a large signal in the overall graph.

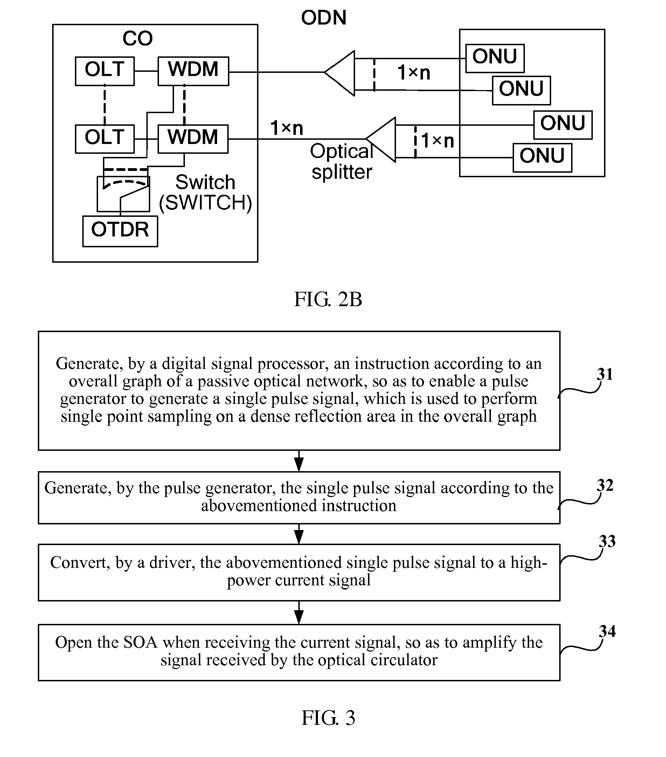

The large signal is a reflected optical signal generated from an optical signal at an optical splitter in the passive optical network under test, where the optical signal is sent by the OTDR. The overall graph is a complete test signal curve graph of the passive optical network under test, and as shown in FIG. 2B, the OTDR accesses the passive optical network under test through a WDM, so as to test the optical network, and obtain a test curve graph of the passive optical network. The test curve graph may be obtained through a conventional OTDR test, and may also be obtained by adopting an OTDR test provided by the embodiment of the present invention.

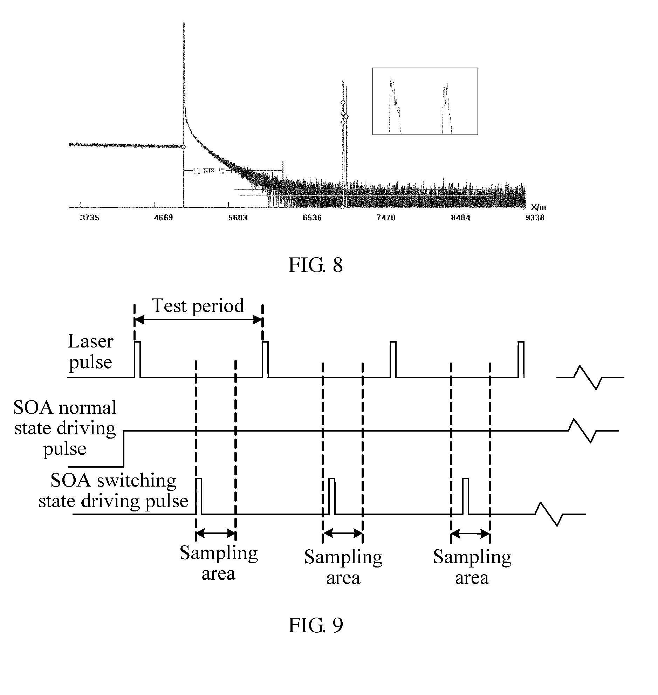

When the test curve graph is obtained by adopting the OTDR test provided by the embodiment of the present invention, the SOA works in a normal state, its driving pulse is a pulse signal shown in the middle of FIG. 9, so that the SOA is in an open state in each test period, to receive and amplify all returned test signals, thereby further improving a signal to noise ratio of the overall graph. The DSP sends a repeated instruction in a test period, and a pulse generator of a laser generates a pulse signal with a fixed pulse width and a fixed duty ratio, and triggers generating a continuous high level by a pulse generator of the SOA, so that the SOA maintains the open state in the test period, that is, to entirely amplify a test signal received by an optical circulator.

Step 22: Generate, by the pulse generator, the pulse signal according to the instruction in step 21 above.

Step 23: Convert, by a driver, the pulse signal to a high-power current signal.

Step 24: When the optical circulator receives a large signal, the SOA is turned off, that is, the SOA is in an absorbing state, and the large signal can not be transferred to an APD, so as to avoid influence on a subsequent small signal, where the influence causes a dead zone.

Step 25: A semiconductor optical amplifier is turned on under control of the foregoing current signal when the optical circulator receives the small signal subsequent to the large signal. At this time, because the influence of the large signal on the subsequent small signal is removed in step 24, a reflected optical signal behind the optical splitter can be obtained, that is, the dead zone subsequent to the large signal is basically eliminated.

FIG. 3 is a flow chart of another method for an optical time-domain reflectometer to obtain a test signal according to an embodiment of the present invention. In this embodiment, an SOA works in a switching state, and the method for the OTDR to obtain the test signal includes:
Step 31: Generate, by a DSP, an instruction according to an overall graph of a passive optical network, so that a pulse generator generates a single pulse signal, which is used to perform single point sampling on a dense reflection area in the overall graph.

That is to say, in one test period, the DSP sends one instruction, so that the pulse generator generates only one pulse signal. However, the generated pulse signal is located in the dense reflection area in the overall graph, so that when an optical circulator receives dense reflected optical signals, the SOA is turned on for a time period to collect one of the reflected optical signals.

In a next test period, the DSP sends one instruction, so that the pulse generator also generates only one pulse signal, the pulse signal is subsequent to the pulse signal of the previous test period, so that when the optical circulator receives dense reflected optical signals, the SOA is turned on for a time period and the time period is subsequent to the open time period in the previous test period, so that the SOA collects a reflected signal in the time period. That is to say, the DSP performs the single point sampling on the dense reflection area in the overall graph in a plurality of test periods, and one reflected optical signal is obtained in each test period, so as to solve a problem that dense reflected optical signals cannot be distinguished in the prior art. Specifically, it is implemented by generating the single pulse signal, so that the SOA is turned on in a corresponding time period and receives one reflected optical signal in the time period.

For a detailed overall graph, reference is made to the illustration in the embodiment shown in FIG. 2A above.

Step 32: Generate, by the pulse generator, the single pulse signal according to the foregoing instruction.

Step 33: Convert, by a driver, the single pulse signal to a high-power current signal.

Step 34: When receiving the current signal, the SOA is turned on and amplifies a signal received by the optical circulator.

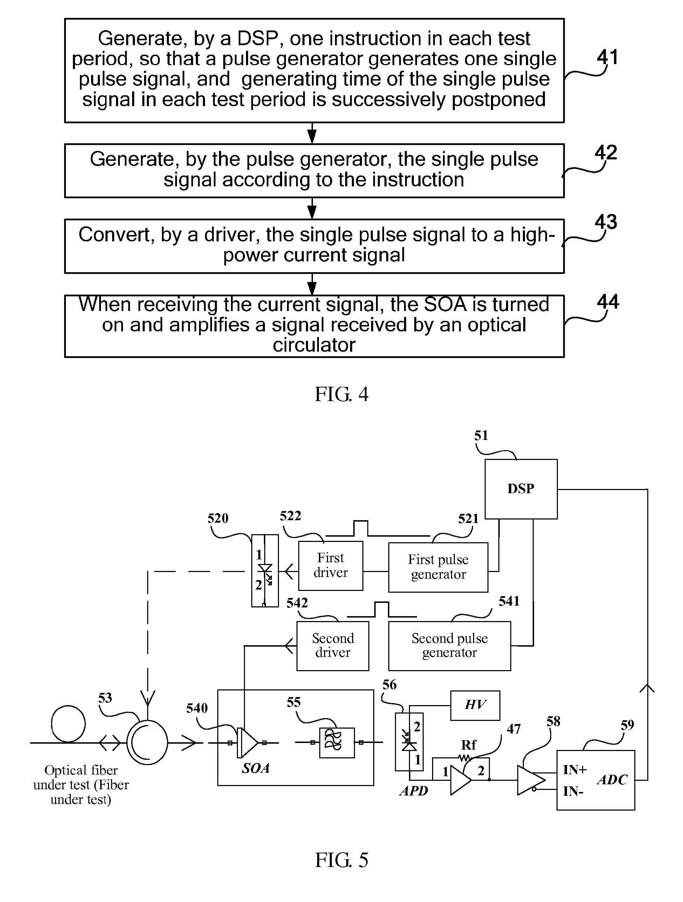

FIG. 4 is a flow chart of still another method for an optical time-domain reflectometer to obtain a test signal according to an embodiment of the present invention. In this embodiment, an SOA works in a switching state, and the method for the OTDR to obtain the test signal includes:
Step 41: Generate, by a DSP, one instruction in each test period, so that a pulse generator generates one single pulse signal, and generating time of the single pulse signal in each test period is successively postponed.
Step 42: Generate, by the pulse generator, the single pulse signal according to the instruction.
Step 43: Convert, by a driver, the foregoing single pulse signal to a high-power current signal.
Step 44: When receiving the current signal, the SOA is turned on and amplifies a signal received by an optical circulator.

In this embodiment, the OTDR directly performs single point sampling on the passive optical network under test in a plurality of test periods, and obtains an optical signal of one time period each time, thereby not only eliminating a dead zone, but also solving a problem of difficulty in distinguishing dense reflected optical signals.

Optionally, in the OTDR provided by the embodiment of the present invention, a WDM filter is connected between the foregoing APD and the SOA, and is configured to filter out an ASE noise of the SOA, so as to avoid influence on sensitivity of the APD, and to further improve accuracy of the test signal.

In the following, FIG. 5 is taken as an example to illustrate a structure of an OTDR in detail.

The OTDR includes a DSP 51, a first pulse generator 521, a first driver 522, a laser 520, an optical circulator 53, a second pulse generator 541, a second driver 542, an SOA 540, a WDM filter 55, an APD 56, a TIA 57, an amplifier 58, and an ADC 59. The APD 56 is connected to a high voltage (HV), and the SOA 540 and the WDM filter 55 are both two-port devices.

The DSP 51 generates a periodically triggered pulse instruction, which is adjusted to a digital signal with a fixed pulse width and a fixed duty ratio after passing through the first pulse generator 521, and then the first driver 522 completes high-power driving, so that the laser 520 generates a pulse laser of a monitored band.

The pulse laser enters through the optical circulator 53 into a passive optical network under test, which includes a backbone of an optical fiber, an optical splitter, and each branch.

A Rayleigh backscattered optical signal and a Fresnel reflected optical signal of each branch return to the optical circulator 53 through the backbone of the optical fiber.

The DSP 51 further generates an instruction, to trigger generating a pulse by the second pulse generator 541. After passing through the second driver 542, the pulse enables the SOA 540 to obtain a proper working current. The SOA 540 amplifies a returned optical signal.

A driving pulse of the SOA 540 may perform sampling in different positions of repeated periods of the laser 520, thereby obtaining signals in a complete period, and the driving pulse of the SOA 540 may be a continuous high level, so that the SOA 540 is in an open state in a test period completely.

When the SOA 540 has no working current, and is in an absorbing state, the returned optical signal does not enter the APD 56, thereby avoiding influence of a previous large signal on a small signal, and eliminating a dead zone effect.

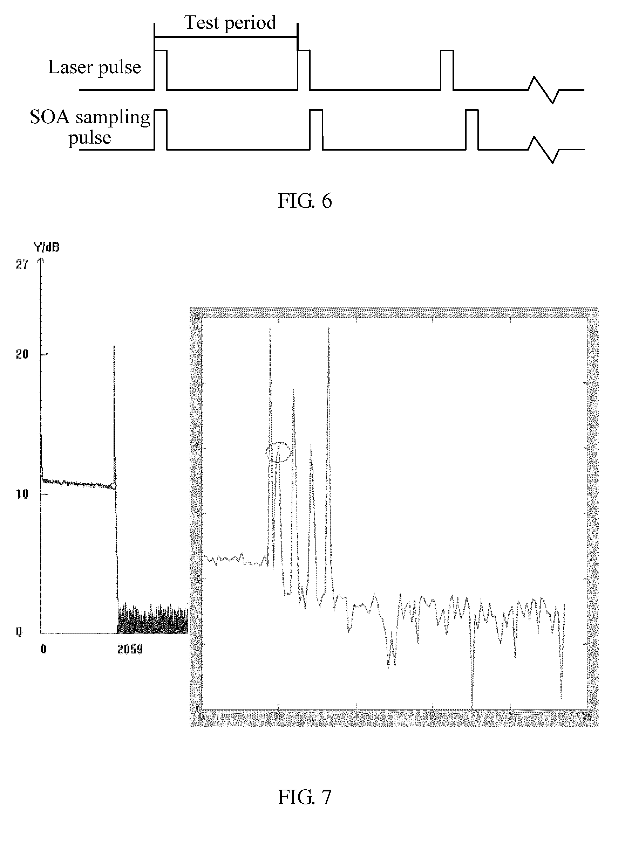

A timing sequence relationship between the laser 520 and the SOA 540 is shown in FIG. 6. A driving pulse of the laser 520 is a single pulse, FIG. 6 shows driving pulses of the laser 520 in four test periods, and it can be seen that a driving pulse of the laser 520 in each test period is the same. The driving pulse of the SOA 540 is also a single pulse, and a position of a pulse signal differs in each test period, which may be seen as sampling on different positions of the repeated periods of the laser 520. In this way, the SOA 540 may obtain a test signal in a position where a pulse signal is located to achieve an objective of distinguishing reflected signals.

When a driving pulse current is applied to the SOA 540, the SOA 540 works in a low noise amplifying state, and an optical signal is amplified to pass through.

The optical signal output by the SOA 540 passes through the WDM filter 55, so as to filter out an ASE noise of the SOA 540 with a wide wavelength, and only allow a wavelength of the laser to pass through.

Then, the optical signal enters the APD 56, and the APD 56 converts the optical signal into a current signal which is proportional to light intensity.

The current signal output by the APD 56 turns into a voltage signal through the TIA 57, enters the ADC 59 after being amplified by the amplifier 58, is converted to a digital signal, and is finally sent to the DSP 51 for processing such as storage, analysis and composition.

When the SOA 540 is in a complete open state, the DSP 51 completes accumulation of each repeated pulse inside overall graphs of a plurality of test periods, that is, accumulates a plurality of overall graphs, so as to improve a signal to noise ratio of an overall graph.

The OTDR provided by this embodiment may enable the SOA 540 to work in a pulse state, which is similar to the single point sampling, that is, the SOA 540 is in the open state at a certain moment or in a certain short time period. When there is no pulse driving current, the SOA 540 works in the absorbing state, and at this time, the optical signal entering the SOA 540 through the optical circulator 53 from the optical fiber is highly isolated, and no reflected optical signal of the optical splitter enters the APD 56, thereby eliminating the dead zone generated by the APD 56 due to reception of a reflected optical signal of the optical splitter.

Because a switching speed of the SOA 540 is below ns (nanosecond) level, a reflected optical signal in a dense reflection area may be collected by improving a speed of the driving pulse current, after being processed by the DSP 51, a test signal curve graph with a high resolution, which the conventional OTDR cannot provide, is obtained.

FIG. 7 is an experiment emulation graph of an embodiment of the present invention, relative to a test curve which is obtained in a conventional way and shown in FIG. 8. It can be seen that in FIG. 7, a dead zone is greatly shortened after an optical signal is reflected by an optical splitter, and the dead zone is basically eliminated. Because of single point sampling, reflecting time depends on a switching speed, which achieves a higher resolution.

For a typical PON network online test, time is crucial. At a CO station, hundreds of PON ports may need to traverse be traversed in the test, and therefore, in order to increase test efficiency, a conventional simulation test may be used first to obtain an overall graph of a passive optical network, including information such as length of a backbone of an optical fiber and a rough position of each optical splitter. Then a sampling test is performed on an optical splitter and a subsequent optical fiber, so as to achieve an objective of increasing a dead zone and a resolution of this segment, thereby optimizing test time.

Specifically, the test procedure includes that:
A laser 520 is started to send a repeated test optical pulse.

Driving of an SOA 540 is set to normal state driving, and is provide with a proper working current. At this time the SOA 540 works in a straight-through amplifying state, enabling a continuous optical signal to enter a subsequent APD 56, that is, enabling an optical signal received by an optical circulator 53 to enter the APD 56.

The APD 56 converts the received optical signal to a current signal, which is proportional to light intensity, is turn into a voltage signal through a TIA 57, enters into the ADC after being amplified and is converted to a digital signal, and finally is sent to a DSP 51 finally, so that the overall graph is obtained. Accumulation of each repeated pulse inside the DSP 51, so as to increase a signal to noise ratio of the overall graph.

The laser is turned off, and the DSP 51 obtains, through calculation and analysis, wave-shaped data, that is, the overall graph, so as to give a specific test section which needs the sampling test.

The laser 520 is restarted to send the repeated test optical pulses.

The DSP 51 gives a driving pulse in the specific sampling region, and sends it into the SOA 540.

The SOA 540 works in a sampling (sampling) state, and provides a path of the optical signal; and when the SOA 540 has no working current after the driving pulse passes through, the SOA 540 is in an absorbing state, and a returned optical signal will not enter the APD 56.

The DSP 51 re-combines data of the two tests into a complete wave-shaped graph.

A specific timing sequence relationship is shown in FIG. 9, in the four test periods, a driving pulse signal of the laser of each test period is the same, that is, the driving pulse of the laser is a repeated pulse signal; in the middle is a normal state driving pulse signal of the SOA, in all test periods, the SOA is driven by a continuous high level signal, that is, the working current is maintained in the SOA; and at the bottom is a switching state driving pulse signal of the SOA, and it can be seen that in different positions of the test period, the DSP triggers generating pulse signals by a second pulse generator, so as to drive the SOA to be on, thereby realizing the single point sampling, obtaining a single point reflected signal, and solving problems such as a dead zone in application of a conventional OTDR in a PON network, and difficulty in distinguishing dense reflected signals, where the cost to implement such is relatively low.

In the foregoing embodiments, through the SOA and through controlling the state of the SOA, the OTDR solves a problem that in the prior art, great reflection and great attenuation caused by the optical splitter exist at the same time while the dead zone in the conventional OTDR technology covers events of most branches, and because the bandwidth of the conventional OTDR is relatively low, dense reflected optical signals behind the optical splitter cannot be distinguished.

Persons of ordinary skill in the art can understand that all or part of the steps of the foregoing method embodiments may be completed by a program instructing relevant hardware. The program may be stored in a computer readable storage medium. When the program runs, the steps of the foregoing methods embodiments are performed. The storage medium may include various media capable of storing program codes, such as a ROM, a RAM, a magnetic disk, or an optical disk.

Finally, it should be noted that the embodiments of the present invention are merely used to illustrate the technical solution of the present invention, but not intended to limit the present invention. Although the present invention is illustrated in detail with reference to the foregoing embodiments, persons of ordinary skill in the art should understand that they can still make modifications to the technical solutions recorded in the foregoing embodiments or make equivalent substitutions to some technical features in the technical solutions; and such modifications and equivalent substitutions do not make essence of corresponding technical solutions depart from the spirit and scope of the technical solution of the embodiments of the present invention.

## Claims

1. An optical time-domain reflectometer, comprising:
a laser, configured to transmit a test light to an optical network under test;
a pulse generator, configured to generate a pulse signal;
a driver, connected to the pulse generator, and configured to convert the pulse signal, generated by the pulse generator, to a control signal used to drive a semiconductor optical amplifier;
a semiconductor optical amplifier, connected to the driver, and configured to selectively absorb or amplify, under control of the control signal of the driver, a test signal from the optical network under test, wherein the test signal is a reflected signal formed through reflection of the test light in the optical network under test; and
a photodetector, connected to the semiconductor optical amplifier, and configured to convert the test signal amplified by the semiconductor optical amplifier into a current signal.

2. The optical time-domain reflectometer according to claim 1, wherein a WDM filter is connected between the semiconductor optical amplifier and the photodetector, and is configured to filter out an ASE noise of the semiconductor optical amplifier.

3. The optical time-domain reflectometer according to claim 1 or 2, further comprising:
a circulator, configured to output the test light, transmitted by the laser, to the optical network under test, and output the test signal, input from the optical network under test, to the semiconductor optical amplifier.

4. The optical time-domain reflectometer according to claim 1 or 2, further comprising:
a digital signal processor, configured to generate a pulse signal generating instruction, and output the pulse signal generating instruction to the pulse generator;
wherein the pulse generator generates the pulse signal when receiving the pulse signal generating instruction from the digital signal processor.

5. A method for an optical time-domain reflectometer according to any one of claims 1 to 4 to obtain a test signal, comprising:
controlling, by a digital signal processor, a pulse generator to generate a pulse signal to enable a semiconductor optical amplifier to work in a switching state;
working, by the semiconductor optical amplifier, in the switching state under control of the pulse signal; and
receiving, by a photodetector, a test signal from a passive optical network under test, when the semiconductor optical amplifier is in an open state.

6. The method for the optical time-domain reflectometer to obtain a test signal according to claim 5, wherein the controlling, by the digital signal processor, the pulse generator to generate the pulse signal to enable the semiconductor optical amplifier to work in the switching state comprises:
generating, by the digital signal processor, an instruction according to an overall graph of the passive optical network, so that the pulse generator generates a pulse signal relevant to absorption of a large signal in the overall graph;
generating, by the pulse generator, the pulse signal according to the instruction; and
converting, by a driver, the pulse signal to a high-power current signal.

7. The method for the optical time-domain reflectometer to obtain a test signal according to claim 6, wherein the working, by the semiconductor optical amplifier, in the switching state under the control of the pulse signal comprises:
turning off the semiconductor optical amplifier, when an optical circulator receives a large signal; and
turning on the semiconductor optical amplifier under control of the current signal, when the optical circulator receives a small signal subsequent to the large signal.

8. The method for the optical time-domain reflectometer to obtain a test signal according to claim 5, wherein the controlling, by the digital signal processor, the pulse generator to generate the pulse signal to enable the semiconductor optical amplifier to work in the switching state comprises:
generating, by the digital signal processor, an instruction according to an overall graph of the passive optical network, so that the pulse generator generates a single pulse signal, which is used to perform single point sampling on a dense reflection area in the overall graph;
generating, by the pulse generator, the single pulse signal according to the instruction; and
converting, by a driver, the single pulse signal to a high-power current signal.

9. The method for the optical time-domain reflectometer to obtain a test signal according to claim 8, wherein the working, by the semiconductor optical amplifier, in the switching state under the control of the pulse signal comprises:
when receiving the current signal, turning on the semiconductor optical amplifier, and amplifying a signal received by an optical circulator.

10. The method for the optical time-domain reflectometer to obtaining a test signal according to claim 5, wherein before the controlling, by the digital signal processor, the pulse generator to generate the pulse signal, the method further comprises:
controlling, by the digital signal processor, the pulse generator to generate another pulse signal, so that the semiconductor optical amplifier is in a normal state;
keeping the semiconductor optical amplifier in the open state under an action of the another pulse signal.

11. The method for the optical time-domain reflectometer to obtain a test signal according to claim 5, wherein the controlling, by the digital signal processor, the pulse generator to generate the pulse signal to enable the semiconductor optical amplifier to work in the switching state comprises:
generating, by the digital signal processor, one instruction in each test period, so that the pulse generator generates one single pulse signal, and generating time of the single pulse signal of each test period is successively postponed;
generating, by the pulse generator, the single pulse signal according to the instruction; and
converting, by a driver, the single pulse signal to a high-power current signal.

12. The method for the optical time-domain reflectometer to obtain a test signal according to claim 11, wherein the working, by the semiconductor optical amplifier, in the switching state under the control of the pulse signal comprises:
when receiving the current signal, turning on the semiconductor optical amplifier, and amplifying a signal received by an optical circulator.
